# EUROPEAN PATENT SPECIFICATION

(11) **EP 3 197 719 B1**
(45) Date of publication and mention of the grant of the patent: **04.07.2018**
(21) Application number: 15794335.8
(22) Date of filing: 21.09.2015
(51) Int. Cl.: B60R 1/072

(54) **MOTION MECHANISM, EXTERIOR MIRROR DEVICE AND VEHICLE**
BEWEGUNGSMECHANISMUS, AUSSENSPIEGEL UND FAHRZEUG
MÉCANISME DE MOVEMENT, DISPOSITIF RÉTROVISEUR EXTÉRIEUR ET VEHICULE

(30) Priority: 22.09.2014 NL 2013509
(43) Date of publication of application: 02.08.2017
(73) Proprietor: MCi (Mirror Controls International) Netherlands B.V., 3447 GK Woerden (NL)
(72) Inventor: VAN STIPHOUT, Paulus Gerardus Maria, NL-3447 GK Woerden (NL)
(74) Representative: V.O.
(86) International application number: PCT/NL2015/050652
(87) International publication number: WO 2016/048140

(56) References cited:
- EP-A1- 2 017 127
- WO-A1-2014/046334
- US-A1- 2011 192 952

## Description

The invention relates to a movement mechanism, in particular a movement mechanism for a rearview device for a vehicle. The movement mechanism can be a mirror adjusting mechanism and/or a movement mechanism for an exterior mirror for a vehicle. Alternatively or additionally, the movement mechanism can be a movement mechanism for an electronic rearview device, which can preferably comprise a camera and/or a display to provide a driver of the vehicle with at least partial rear view. The movement mechanism can be an adjusting mechanism for adjusting at least a rearview device attached to a vehicle, such as a mirror plate, a camera and/or a display, preferably located substantially on an exterior of a body of a vehicle. Such movement mechanism is provided with a base element and a support element, which, inserted into each other, form a ball hinge construction, the support element being rotatable relative to the base element about at least a first virtual axis, which passes substantially through a virtual center of the ball hinge construction, the support element being provided with drive means to enable the support element to be moved relative to the base element, which drive means are housed in the support element in order to move along with the support element when the support element is moved relative to the base element.

Such a movement mechanism can be used, for instance, to make the support element perform a movement about one or two (virtual) axes relative to a base element that is set up fixedly, for instance in a casing of an exterior mirror device, while on the support element, for instance, a mirror plate may be mounted, and the mirror device casing, in which the base element may be mounted, can be fixed, for instance, to a vehicle. As the drive means are provided in the support element, a fairly compact buildup of the movement mechanism can be obtained, which is of great importance considering the ever-increasing requirements imposed in respect of the dimensions of such movement mechanisms and exterior mirror devices.

A movement mechanism as described above is known for a movement about two axes from International patent application WO 00/69 685, where in the ball hinge construction an intermediate shell is present between the base element and the support element. While this movement mechanism is fairly compact in buildup, it does have a rather complex design, it is relatively difficult to manufacture and/or assemble, is relatively costly and is relatively sensitive to failure. Moreover, in practice, the movement mechanism has been found not to be properly vibration-free and to have relatively much play.

The invention has as an object the provision of an alternative movement mechanism and/or an alternative exterior mirror device. In particular, the invention contemplates the provision of a movement mechanism and/or an exterior mirror device that can reduce or even eliminate one or more of the disadvantages of the known movement mechanisms and/or exterior mirror devices. In aspects, the invention contemplates the provision of a more compact movement mechanism. Further, the invention alternatively or additionally contemplates the provision of a movement mechanism that on the one hand is relatively simple in design, is relatively vibration-free in use, and/or has relatively little play, while on the other hand a compact buildup of the movement mechanism is maintained and in particular embodiments can even be further improved.

In a first aspect of the invention, the invention provides a movement mechanism in which the drive means comprise a first electric motor and a first drive train having an output gearwheel, the output gearwheel engaging a non-straight first drive rod located in the support element, the first drive rod being provided with an anchor part which is connected with the base element, for instance by being snapped into it, so that the first drive rod does not move along with the support element when the latter is moved relative to the base element.

It will be clear to one skilled in the art that the non-straight first drive rod has a shape deviating from a straight line, and can therefore have, in particular, a bent or curved shape. For instance, the first drive rod can extend along a portion of a circular arc, for instance substantially over or along a substantially convex or concave surface of a spherical segment that may be formed by the base element or the support element. Additionally or alternatively, the first drive rod may be formed as a ring segment.

The first drive rod may be provided with teeth that engage teeth of the output gearwheel of the first drive train. The first drive rod can be a bent or curved rack.

By connecting the first drive rod with the base element with the aid of the anchor part, the output gearwheel of the first drive train, provided in the support element, can push off via the drive rod from the base element and thereby cause the support element to pivot relative to the base element about the first axis. In this elegant fashion, the invention can therefore provide a relative simply built-up and relatively compact movement mechanism. Moreover, due to this buildup of the movement mechanism, an intermediate shell can be omitted. As a result, there can be less play in the movement mechanism and it can be relatively vibration-free in use.

In a preferred embodiment, according to an aspect of the invention, the support element is rotatable relative to the base element also about a second virtual axis. The second virtual axis then passes substantially through the above-mentioned virtual center of the ball hinge construction. The drive means housed in the support element comprise a second drive train having a second output gearwheel, the second output gearwheel engaging a second non-straight drive rod located in the support element, the second drive rod being provided with a second anchor part which is connected with the base part, for instance by being snapped into it, so that the second drive rod does not move along with the support element when the latter is moved relative to the base element.

What can be accomplished with such a movement mechanism is that any object or element supported by the support element, such as, for example, a mirror surface, a display and/or a camera, can have at least two degrees of movement and hence can be adjusted relatively well, for instance to comply relatively well with the requirements and/or the wishes for instance entertained by a driver of a vehicle regarding the positioning or fine-tuning of the object or element mentioned.

It will be clear to one skilled in the art that the non-straight second drive rod has a shape deviating from a straight line, and can therefore have, in particular, a bent or curved shape. For instance, the second drive rod can extend along a portion of a circular arc, for instance substantially over or along a substantially convex or concave surface of a spherical segment which may be formed by the base element or the support element. Additionally or alternatively, the second drive rod may be formed as a ring segment.

The second drive rod may be provided with teeth that engage teeth of the output gearwheel of the second drive train. The second drive train can be a bent or curved rack.

In a further preferred embodiment according to an aspect of the invention, the first anchor part is mounted rotatably to some extent relative to a second virtual axis in a recess in the base element. The second virtual axis then passes substantially through the above-mentioned virtual center of the ball hinge construction, and the second virtual axis further makes an angle of about 90° with the first virtual axis in a plane in which both virtual axes are substantially located. It is noted that this plane hence also passes substantially through the virtual center of the ball hinge construction. Preferably, the second anchor part is then mounted rotatably to some extent relative to the first virtual axis in a second recess in the base element.

It is noted that the first and/or the second drive rod can have the shape of a ring segment.

Preferably, a ring segment-shaped first drive rod has a virtual central axis that substantially coincides with the first virtual axis and/or a ring segment-shaped second drive rod has a virtual central axis that substantially coincides with the second virtual axis.

For reasons of space, for instance because a first electric motor of a first drive train and a second electric motor of a second drive train can then be relatively simply placed parallel, the first and/or the second drive rod can have the shape of a ring segment that is rotatable relative to a third virtual axis, which third virtual axis passes substantially through the virtual center of the ball hinge construction and which, in the plane in which the third virtual axis and the first virtual axis and/or second virtual axis are substantially located, makes an angle of about 45° with the first virtual axis and/or an angle of about 45° with the second virtual axis.

This embodiment of interest in terms of space, however, has an associated problem. For the third virtual axis extends substantially at an angle of 45° relative to the first virtual axis. Upon a rotation of the support element about this first virtual axis, however, the first anchor element may unintentionally lock up the mechanism and prevent this rotation if there is not sufficient play in the mechanism. To solve this problem, different options have been found.

Thus, firstly, the first recess can have, for instance, the shape of a slotted hole and the first anchor part can be in the form of a preferably cylinder-shaped shaft rotatable in the slotted hole, which is slidable in the length direction of the slotted hole. Most preferably, the length of the slotted hole can be substantially oriented in a direction substantially around the virtual center and substantially in the plane in which both virtual axes are substantially located.

Secondly, the first drive rod may for instance be located in the support element such that, upon a rotation of the support element about the first virtual axis, a relatively small displacement of the first anchor part becomes possible. Preferably, then, substantially in the plane in which both virtual axes are substantially located, this relatively small displacement can be a relatively small pivotal movement about the virtual center.

Thirdly, the base element may for instance be provided with a first recess which is arranged movably in the base element, such that, upon a rotation of the support element about the first virtual axis, a relatively small displacement of the first recess and/or of the first anchor part positioned therein becomes possible. Preferably, then, this relatively small displacement can be substantially located in the plane in which both virtual axes are substantially located and this relatively small displacement can be a relatively small pivoting movement about the virtual center.

In the above-mentioned three examples that can solve the problem of the first anchor element possibly locking up the movement mechanism unintentionally, however, play is introduced into the movement mechanism.

By configuring, in advantageous embodiments, the second recess and the second anchor part placed therein such that the second anchor part is to some extent rotatable relative to the first virtual axis, and that shifting of the second anchor part and/or of the first virtual axis relative to the base element is prevented, redundant play can be elegantly counteracted. Surprisingly, the second recess can hence be formed relatively closely, for example as a round hole, around the second anchor part, and the second recess thus need not be provided as a slotted hole or a displaceable hole at all. On the contrary, it can actually be advantageous not to do so and to provide only the first recess in such a manner. This measure can elegantly obviate the possibility of the base element and support element undesirably rotating relative to each other about an axis that is substantially transverse to the plane defined by the two virtual axes. The support element and a mirror surface supported thereby and/ or other element supported thereby, such as a display or camera, can thus be substantially restrained from rotation, which can strongly counteract unwanted rotations and/or vibrations of, for example, the mirror surface or the display.

The invention relates not only to a movement mechanism, but also to an exterior mirror for a vehicle, provided with such a movement mechanism. In addition, the invention also relates to a vehicle.

Further advantageous embodiments of the invention are set forth in the subclaims.

The invention will be further elucidated on the basis of an exemplary embodiment represented in the drawing. In the drawing:
Fig. 1 shows a first schematic perspective view of a movement mechanism according to the invention;
Fig. 2 shows a second schematic perspective view of the movement mechanism of Fig. 1;
Fig. 3 shows a third schematic perspective view of the movement mechanism of Figs. 1 and 2, in which it is partly cutaway; and
Fig. 4 is a perspective view of a cross section of the cutaway movement mechanism of Fig. 3.

The drawing shows merely schematic representations of preferred embodiments of the invention. In the figures, like or corresponding parts are indicated with the same or corresponding reference numerals.

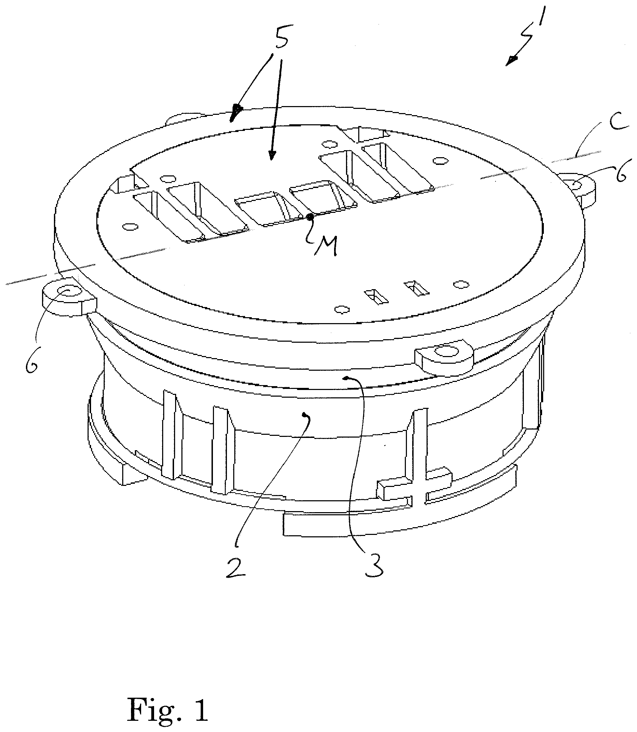

The movement mechanism 1 according to the exemplary embodiment of Figs. 1-4 comprises a base element 2 and a support element 3, which, inserted into each other, form a ball hinge construction. To that end, the base element 2 and the support element 3 can comprise mating spherical segments 2a, 3a, where one spherical segment 2a can be a concave spherical segment in which fits the other spherical segment 3a, which can then be a convex spherical segment. In respect of the spherical segments it is noted that one of the two spherical segments 2a may cover a relatively small portion of a sphere, and, for instance, may be formed by just a substantially ring-shaped spherical segment, which is movably, preferably close-fittingly, placed in or around the other spherical segment 3a.

It is noted that the base element 2 and the support element 3 may be cardanically mounted relative to each other.

Further, it is noted that in the example shown here the support element 3 is inserted in the base element 2, but that in alternative embodiments, conversely, the base element 2 may, for instance, be movably placed in the support element 3. In such a case, the spherical segment of the base element 2 may be formed, for instance, as a convex spherical segment, while the support element 3, in turn, can then comprise a concave spherical segment cooperating therewith.

The support element 3 of the example shown in Figs. 1-4 is rotatable relative to the base element 2 about at least a first virtual axis A, which passes substantially through a virtual center or midpoint M of the ball hinge construction. It is noted that this virtual center M may be formed by the center of a virtual sphere of which the spherical segment 2a of the base element 2 is a part and/or by the center of a sphere of which the spherical segment 3a, which is part of the support element 3, forms a part. Most preferably, the centers of the two spherical segments 2a, 3a can substantially coincide.

The support element 3 is provided with drive means 16, 18a, 18b, 18c, 18d, 11 to enable the support element 3 to be moved relative to the base element 2. The drive means comprise a first electric motor 16 and a first drive train 10 with an output gearwheel 11. The drive means 16, 18a, 18b, 18c, 18d, 11 are housed in the support element 3 in a manner moving along with the latter. This means that they move along with the support element 3 when the support element 3 is moved relative to the base element 2. The drive means 16, 18a, 18b, 18c, 18d, 11 may for instance be suspended in the support element 3 or be suspended in a supporting structure placed in the support element, and which supporting structure is preferably fixed in the support element. A respective specimen of the drive means 16, 18a, 18b, 18c, 18d, 11 may for instance be fixed in the support element 3 and/or in the supporting structure or may, for instance, be rotatably suspended therein or be located therein in yet another manner.

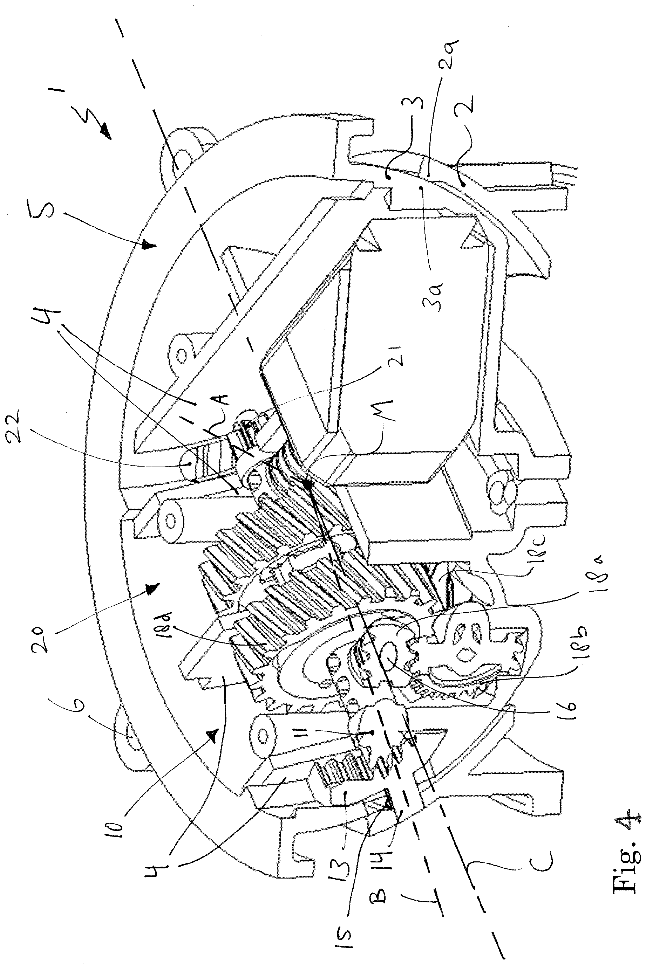

The output gearwheel 11, which may be provided, for instance, with involute or other outer toothing, engages a non-straight first drive rod 13, located in the support element 3, which may be provided, for instance, with involute or other inner toothing. As can be seen in Fig. 4, the first drive rod 13 is provided with an anchor part 14 which is connected with the base element 2, for instance by being snapped into it, so that the first drive rod 13 does not move along with the support element 3 when the latter is moved relative to the base element 2.

The drive rod 13, as for instance in the example shown here, may be located substantially inside the support element 3. The anchor part 14 can then extend through a, preferably slotted, opening 12 to the base element 2. Alternatively, the drive rod 13 may also be placed at a different spot. For instance, the drive rod 13 may be located in a slot provided in the exterior of the support element 3. In such a case, a, preferably slotted, opening may then be provided in the support element 3 to facilitate the output gearwheel 11 engaging the drive rod 13.

It is noted that the non-rectilinear drive rod 13 may be located, for instance, between two ribs 4 or surfaces 4 which can prevent lateral displacement of the drive rod 13.

Alternatively or additionally, the drive rod 13 may be bearing-mounted, for example with the aid of a slide bearing. Also, the first output gearwheel 11 may for instance be provided with a shaft part 11a, which is radially bearing-mounted in a groove in the drive rod 13.

As can be properly seen in, for instance, Fig. 4, the drive train 10 can comprise a number of cooperating elements, preferably gearwheels 18a-18d, 11, which can preferably define a number of reduction stages. In the example shown here, the output or driven shaft 16a of the first motor 16 is for instance provided with a first gearwheel 18a, mounted thereon substantially non-rotatably, for instance with the aid of a slip coupling, and which may be implemented, for instance, as a worm 18a. This first gearwheel 18a can drive a second gearwheel 18b which, via a third gearwheel 18c substantially non-rotatably connected therewith, such as, for instance, a worm 18c, can drive a fourth gearwheel 18d. The fourth gearwheel 18d may for instance be substantially non-rotatably connected with a fifth gearwheel, here forming the output gearwheel 11 of the first drive train 10.

It is noted that, preferably, the rotary shafts and the gearwheels 18a-18d, 11 of the drive train 10 substantially cannot move axially and neither laterally in the support element 3.

To enable, for instance, an adjustment of the support element 3 about two axes, so that, for instance, the rotation of a mirror glass about both a Y axis and an X axis can be enabled, the support element 3 can most preferably be rotatable relative to the base element 2 about a second virtual axis B as well. This second virtual axis B then passes, preferably, substantially through the virtual center M of the ball hinge construction. The drive means housed in the support element 3 can then comprise a second drive train 20 with a second output gearwheel 21, the second output gearwheel 21 engaging a non-straight second drive rod located in the support element 3.

Preferably, the second drive train 20 is driven by a second electric motor 26, which may be placed, for instance, substantially parallel with the first electric motor 16 in the support element 3. The second drive train 20 may for instance be configured substantially correspondingly to the first drive train 10.

It is noted that the first electric motor 16 and/or the second electric motor 26 can most preferably be an electric motor with mechanical or sensory position feedback of the rotor position for the control of coils of the electric motor concerned.

Preferably, the first and/or the second electric motor may be implemented as an electric motor with brushes, such as, for instance, a direct-current motor with brushes.

For instance to allow the movement mechanism 1 to be made of relatively inexpensive design, it may be advantageous that the first and/or the second electric motor is not a stepping motor.

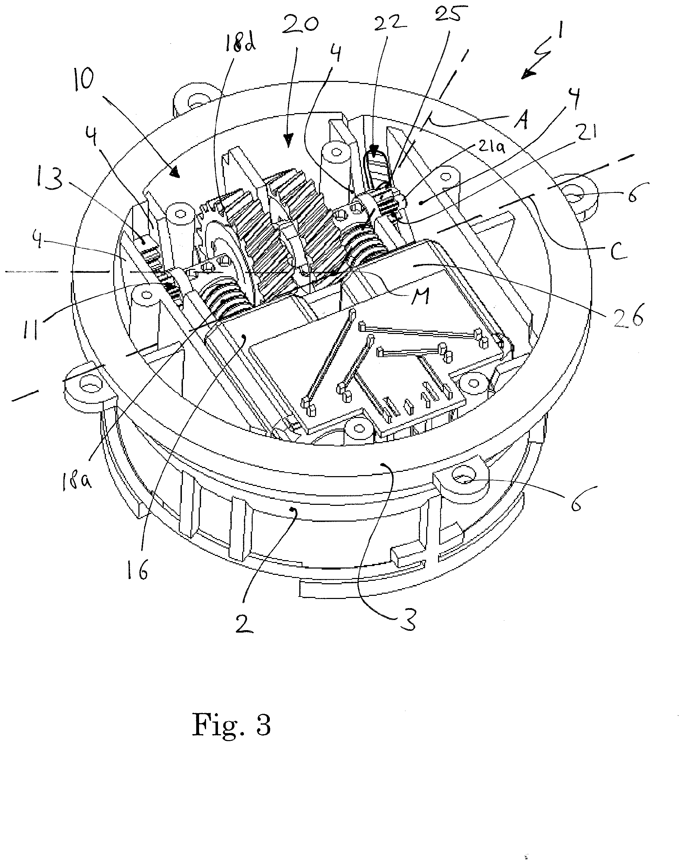

In Figs. 3 and 4, the second, non-straight drive rod 23 is omitted so that a second, preferably slotted, opening 22 is made visible. In respect of the first and second opening 12, 22, which may be made of slotted shape, it is noted that, preferably, they can be elongate and can extend in a length direction that is substantially located in a plane which is perpendicular to the plane in which the first and second virtual axes A, B are located and which runs parallel with the respective virtual axis B, A passing through the anchor part 14, 24 extending through the respective opening 12, 22.

For instance just as with the first drive rod 13, the second drive rod 23 may be provided with its own anchor part 24 which is connected with the base element 2, for instance by being snapped into it, so that the second drive rod does not move along with the support element 3 when the latter is moved relative to the base element 2.

The first anchor part 14 may be mounted rotatably to some extent relative to a second virtual axis B, in a, preferably slightly elongate, recess 15 in the base element 2. It is noted that the second virtual axis B can run substantially through the virtual center M of the ball hinge construction and that the second virtual axis B can make an angle of about 90° with the first virtual axis A in a plane in which both virtual axes A, B are substantially located.

Additionally or alternatively, the second anchor part 24 may be mounted rotatably to some extent relative to the first virtual axis A, in a second, preferably round, recess 25 in the base element 2.

The first and/or the second drive rod 13, 23 can have the shape of a ring segment which is rotatable relative to a third virtual axis C, which runs substantially through the virtual center M of the ball hinge construction and which, in the plane in which the third virtual axis C and the first virtual axis A and/or second virtual axis B are substantially located, makes an angle of about 45° with the first virtual axis A and/or makes an angle of about 45° with the second virtual axis B.

In the example shown here, the virtual center M of the ball hinge construction is approximately in a top surface 5 of the support element 3, and the third virtual axis C can be approximately in this top surface 5. However, in alternative embodiments the top surface may also be placed below or above the virtual center M of the ball hinge construction, and the third virtual axis C can then, for instance, be above, or below, the top surface 5. It is noted that, additionally or alternatively, the third virtual axis C can run obliquely relative to the top surface 5.

In respect of the support element 3, it is noted that it, preferably the top surface 5 thereof, may be configured for supporting a mirror surface or other element or object, such as for instance a camera or display. To that end, for instance, the support element 3 may be provided with fastening means such as for instance screw holes, bushes, pins and/or eyes 6, which can be used, for instance, to secure a mirror glass defining the mirror surface on the support element 3. Alternatively or additionally, the support element 3 can support the mirror surface directly, for instance in that the mirror surface is coated onto a top surface 5 of the support element 3.

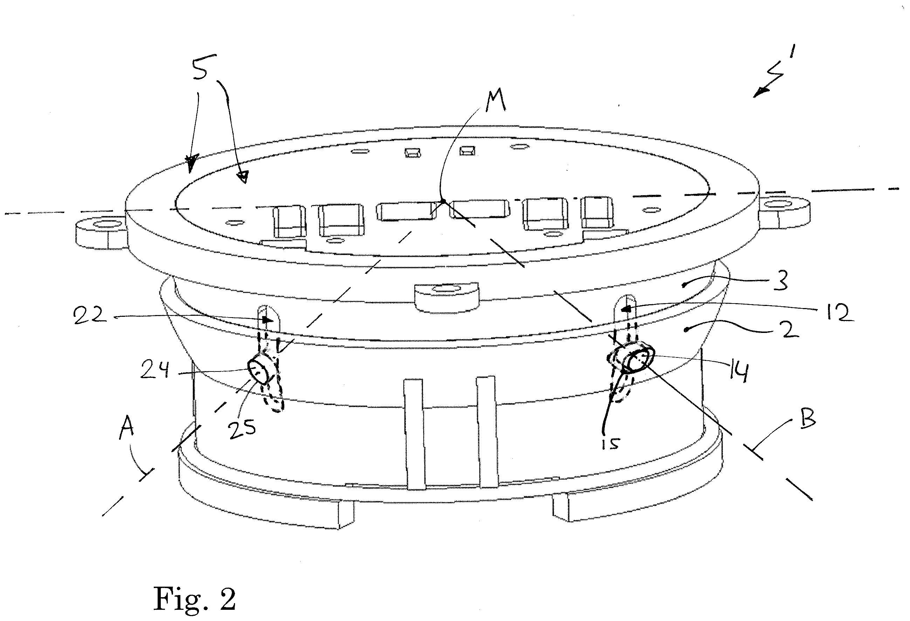

As can be seen in Fig. 4 and can be seen still better in Fig. 2, the first recess 15 may be formed as a somewhat elongate hole or as a slotted hole 15. Further, the first anchor part 14 can have the shape of a preferably cylinder-shaped shaft 14 rotatable in the slotted hole 15, which is slidable in the length direction of the slotted hole 15. The length of the slotted hole 15 can then be preferably substantially oriented in a direction forming substantially a part of an arc around the virtual center M, which part of an arc may then most preferably be substantially located in the plane in which both virtual axes A, B are substantially located. Alternatively or additionally, the first anchor part 14 and/or the second virtual axis B may be provided rotatably to some extent in a different manner, about the virtual center M and in the plane in which both virtual axes A, B are substantially located. This can for instance be accomplished by having the recess 15, which can then be formed, for instance, as a round hole, move relative to the base element 2. This could be done, for instance, by providing the first recess in a sliding element slidable relative to the base element, while the sliding element can for instance be slidable in a direction forming substantially a part of an arc around the virtual center M, which part of an arc may then most preferably be substantially located in the plane in which both virtual axes A, B are also substantially located.

Highly advantageously, as can be properly seen in Fig. 2, the second recess 25 and the second anchor part 24 placed therein may be so configured that the second anchor part 24 is rotatable, at least to some extent, relative to the first virtual axis A and such that shifting of the second anchor part 24 and/or shifting of the first virtual axis A relative to the base element 2 is prevented. In an advantageous embodiment, the second recess 25 can thus be formed, for instance, as a round hole 25, which may be provided in a fixed, substantially undisplaceable, spot in the base element 2, in contrast to the first recess 15 which in such an embodiment, for instance, is displaceable and/or does allow play in that it is, for instance, of somewhat elongate design.

The invention also relates to an exterior mirror device for a vehicle, provided with a movement mechanism according to an aspect of the invention. In the mirror device, the base element 2 may for instance be mounted in a mirror housing and/or on a frame of this mirror device. The base element may for instance be substantially fixedly secured therein or thereon. Alternatively, the base element 2 may for instance also form an integrated part of such a mirror housing or such a frame.

Furthermore, the invention relates to a vehicle, preferably a motor vehicle, such as, for instance, an automobile, truck, camper or bus, that is provided with a movement mechanism and/or with an exterior mirror device according to an aspect of the invention.

## Claims

1. A movement mechanism (1), comprising a base element (2) and a support element (3), which, inserted into each other, form a ball hinge construction, the support element (3) being rotatable relative to the base element (2) about at least a first virtual axis (A), which passes substantially through a virtual center (M) of the ball hinge construction, the support element (3) being provided with drive means to enable the support element (3) to be moved relative to the base element (2), which drive means comprise a first electric motor (16) and a first drive train (10) having an output gearwheel (11), **characterized in that** said drive means are housed in the support element (3) in order to move along with the support element (3) when the support element (3) is moved relative to the base element (2), said output gearwheel (11) of the first drive train (10) engaging a non-straight, that is, curved, first drive rod (13), located in the support element (3), said first drive rod (13) being provided with an anchor part (14) which is connected with the base element (2) so that said first drive rod (13) does not move along with the support element (3) when the latter is moved relative to the base element (2).

2. The movement mechanism (1) according to claim 1, wherein the support element (3) is rotatable relative to the base element (2) also about a second virtual axis (B), which passes substantially through said virtual center of the ball hinge construction, the drive means housed in the support element (3) comprising a second drive train (20) with a second output gearwheel (21), said second output gearwheel (21) engaging a non-straight, that is, curved, second drive rod, located in the support element (3), said second drive rod being provided with a second anchor part (24) which is connected with the base part so that said second drive rod does not move along with the support element (3) when the latter is moved relative to the base element (2).

3. The movement mechanism (1) according to claim 1 or 2, wherein the first anchor part (14) is mounted rotatably to some extent relative to a second virtual axis (B) in a recess (15) in the base element (2), wherein the second virtual axis (B) passes substantially through said virtual center of the ball hinge construction, and wherein the second virtual axis (B) makes an angle of about 90° with the first virtual axis (A) in a plane in which both virtual axes (A, B) are substantially located.

4. The movement mechanism (1) according to claim 2 or 3, wherein the second anchor part (24) is mounted rotatably to some extent relative to the first virtual axis (A) in a second recess (25) in the base element (2).

5. The movement mechanism according to any one of the preceding claims, wherein the first drive rod (13) has the form of a ring segment of which a virtual central axis substantially coincides with the first virtual axis.

6. The movement mechanism according to any one of claims 2-5, wherein the second drive rod (23) has the form of a ring segment of which a virtual central axis substantially coincides with the second virtual axis (B).

7. The movement mechanism according to any one of claims 1-4, wherein the first and/or the second drive rod (13, 23) has the form of a ring segment which is rotatable relative to a third virtual axis (C), which passes substantially through said virtual center of the ball hinge construction and which, in the plane in which the third virtual axis (C) and the first virtual axis (A) and/or second virtual axis (B) are substantially located, makes an angle of about 45° with said first virtual axis (A) and/or an angle of about 45° with said second virtual axis (B).

8. The movement mechanism according to any one of claims 3-7, wherein the first recess (15) is in the form of a slotted hole (15) and the first anchor part (14) is in the form of a, preferably cylinder-shaped, shaft (14) rotatable in the slotted hole (15), which is slidable in the length direction of the slotted hole (15), preferably with the length of the slotted hole (15) being substantially oriented in a direction substantially around the virtual center (M) and substantially in the plane in which both virtual axes (A, B) are substantially located.

9. The movement mechanism (1) according to any one of claims 3-8, wherein the first drive rod (13) is located in the support element (3) such that, upon a rotation of the support element (3) about the first virtual axis (A), a relatively small displacement of the first anchor part (14) becomes possible, preferably wherein, substantially in the plane in which both virtual axes (A, B) are substantially located, said relatively small displacement is a relatively small pivoting movement about the virtual center (M).

10. The movement mechanism (1) according to any one of claims 9, wherein the base element (2) is provided with a first recess (15) which is arranged movably in the base element (2) such that, upon a rotation of the support element (3) about the first virtual axis (A), a relatively small displacement of said first recess (15) and/or of the first anchor part (14) positioned therein becomes possible, preferably wherein said relatively small displacement is substantially located in the plane in which both virtual axes (A, B) are substantially located and concerns a relatively small pivoting movement about the virtual center (M).

11. The movement mechanism (1) according to any one of claims 8-10, wherein the second recess (25) and the second anchor part (24) placed therein are configured such that the second anchor part (24) is rotatable to some extent relative to the first virtual axis (A) and such that shifting of the second anchor part (24) and/or of the first virtual axis (A) relative to the base element (2) is prevented.

12. The movement mechanism (1) according to any one of the preceding claims, wherein the first drive rod (13) and/or the second drive rod is provided with a toothing to mesh with the toothing of the respective output gearwheel (11, 21) and wherein the respective output gearwheel (11, 21) is provided with or is provided on a shaft part (11a, 21a) which is radially located in a groove in the respective drive rod (13, 23).

13. The movement mechanism (1) according to any one of the preceding claims, wherein the support element (3) supports a mirror surface, a display and/or a camera, which is preferably substantially immovably fixed relative to said support element.

14. An exterior mirror device for a vehicle, provided with a movement mechanism (1) according to any one of the preceding claims.

15. A vehicle, in particular a motor vehicle, provided with a movement mechanism (1) according to any one of claims 1-13 and/or an exterior mirror device according to claim 14.

## Patentansprüche

1. Bewegungsmechanismus (1), umfassend ein Basiselement (2) und ein Trägerelement (3), die, wenn sie ineinandergesetzt sind, eine Kugelgelenkkonstruktion bilden, das Trägerelement (3) drehbar in Bezug auf das Basiselement (2) um mindestens eine erste virtuelle Achse (A), die im Wesentlichen durch einen virtuellen Mittelpunkt (M) der Kugelgelenkkonstruktion geht, das Trägerelement (3) versehen mit Antriebsmitteln, um es dem Trägerelement (3) zu ermöglichen, in Bezug auf das Basiselement (2) bewegt zu werden, welche Antriebsmittel einen ersten Elektromotor (16) und einen ersten Antriebsstrang (10) mit einem Ausgangszahnrad (11) umfassen, **dadurch gekennzeichnet, dass** die Antriebsmittel in dem Trägerelement (3) untergebracht sind, um sich zusammen mit dem Trägerelement (3) zu bewegen, wenn das Trägerelement (3) in Bezug auf das Basiselement (2) bewegt wird, welches Ausgangszahnrad (11) des ersten Antriebsstrangs (10) in eine nicht gerade, d. h. gebogene, erste, in dem Trägerelement (3) angeordnete Antriebsstange (13) greift, die erste Antriebsstange (13) versehen mit einem Ankerteil (14), das so mit dem Basiselement (2) verbunden ist, dass die erste Antriebsstange (13) sich nicht zusammen mit dem Trägerelement (3) bewegt, wenn Letzteres in Bezug auf das Basiselement (2) bewegt wird.

2. Bewegungsmechanismus (1) nach Anspruch 1, wobei das Trägerelement (3) in Bezug auf das Basiselement (2) auch drehbar ist um eine zweite vertikale Achse (B), die im Wesentlichen durch den virtuellen Mittelpunkt der Kugelgelenkkonstruktion geht, die Antriebsmittel, untergebracht in dem Trägerelement (3), umfassend einen zweiten Antriebsstrang (20) mit einem zweiten Ausgangszahnrad (21), welches zweite Ausgangszahnrad (21) in eine nicht gerade, d. h. gebogene, in dem Trägerelement (3) angeordnete zweite Antriebsstange geht, die zweite Antriebsstange versehen mit einem zweiten Ankerteil (24), das so mit dem Basisteil verbunden ist, dass die zweite Antriebsstange sich nicht zusammen mit dem Trägerelement (3) bewegt, wenn Letzteres in Bezug auf das Basiselement (2) bewegt wird.

3. Bewegungsmechanismus (1) nach Anspruch 1 oder 2, wobei das erste Ankerteil (14) einigermaßen drehbar in Bezug auf eine zweite virtuelle Achse (B) in einer Vertiefung (15) in dem Basiselement (2) montiert ist, wobei die zweite virtuelle Achse (B) im Wesentlichen durch den virtuellen Mittelpunkt der Kugelgelenkkonstruktion geht und wobei die zweite virtuelle Achse (B) einen Winkel von ungefähr 90° mit der ersten virtuellen Achse (A) in einer Ebene macht, in der sich beide virtuellen Achsen (A, B) im Wesentlichen befinden.

4. Bewegungsmechanismus (1) nach Anspruch 2 oder 3, wobei das zweite Ankerteil (24) einigermaßen drehbar in Bezug auf die erste virtuelle Achse (A) in einer zweiten Vertiefung (25) in dem Basiselement (2) montiert ist.

5. Bewegungsmechanismus nach einem der vorhergehenden Ansprüche, wobei die erste Antriebsstange (13) die Form eines Ringsegments hat, von dem eine virtuelle Mittelachse im Wesentlichen deckungsgleich mit der ersten virtuellen Achse ist.

6. Bewegungsmechanismus nach einem der Ansprüche 2-5, wobei die zweite Antriebsstange (23) die Form eines Ringsegments hat, von dem eine virtuelle Mittelachse im Wesentlichen deckungsgleich mit der zweiten virtuellen Achse (B) ist.

7. Bewegungsmechanismus nach einem der Ansprüche 1-4, wobei die erste und/oder die zweite Antriebsstange (13, 23) die Form eines Ringsegments hat, das drehbar in Bezug auf eine dritte virtuelle Achse (C) ist, die im Wesentlichen durch den virtuellen Mittelpunkt der Kugelgelenkkonstruktion geht und die in der Ebene, in der die dritte virtuelle Achse (C) und die erste virtuelle Achse (A) und/oder die zweite virtuelle Achse (B) sich im Wesentlichen befinden, einen Winkel von ungefähr 45° mit der ersten virtuellen Achse (A) und/oder von ungefähr 45° mit der zweiten virtuellen Achse (B) sich befinden.

8. Bewegungsmechanismus nach einem der Ansprüche 3-7, wobei die erste Vertiefung (15) in der Form eines schlitzförmigen Lochs (15) ist und das erste Ankerteil (14) in der Form eines vorzugsweise zylinderförmigen Schafts (14), drehbar in dem schlitzförmigen Loch (15), ist, der gleitbar in der Längsrichtung des geschlitzten Lochs (15) ist, bevorzugt mit der Länge des schlitzförmigen Lochs (15) im Wesentlichen ausgerichtet in eine Richtung, im Wesentlichen um den virtuellen Mittelpunkt (M) herum und im Wesentlichen in der Ebene, in der sich beide virtuellen Achsen (A, B) im Wesentlichen befinden.

9. Bewegungsmechanismus (1) nach einem der Ansprüche 3-8, wobei die erste Antriebsstange (13) so in dem Trägerelement (3) angeordnet ist, dass bei einer Drehung des Trägerelements (3) um die erste virtuelle Achse (A) eine relativ kleine Verschiebung des ersten Ankerteils (14) möglich wird, bevorzugt wobei im Wesentlichen in der Ebene, in der sich beide virtuellen Achsen (A, B) im Wesentlichen befinden, die relativ kleine Verschiebung eine relativ kleine Drehbewegung um den virtuellen Mittelpunkt (M) ist.

10. Bewegungsmechanismus (1) nach einem der Ansprüche 9, wobei das Basiselement (2) versehen ist mit einer ersten Vertiefung (15), die beweglich so in dem Basiselement (2) angeordnet ist, dass bei einer Drehung des Trägerelements (3) um die erste virtuelle Achse (A) eine relativ kleine Verschiebung der ersten Vertiefung (15) und/oder des darin positionierten Ankerteils (14) möglich wird, bevorzugt wobei die relativ kleine Verschiebung im Wesentlichen in der Ebene erfolgt, in der beide virtuellen Achsen (A, B) sich im Wesentlichen befinden, und eine relativ kleine Drehbewegung um den virtuellen Mittelpunkt (M) betrifft.

11. Bewegungsmechanismus (1) nach einem der Ansprüche 8-10, wobei die zweite Vertiefung (25) und das darin platzierte zweite Ankerteil (24) so konfiguriert sind, dass das zweite Ankerteil (24) einigermaßen drehbar in Bezug auf die erste virtuelle Achse (A) ist und so, dass das Verschieben des zweiten Ankerteils (24) und/oder der ersten virtuellen Achse (A) in Bezug auf das Basiselement (2) verhindert wird.

12. Bewegungsmechanismus (1) nach einem der vorhergehenden Ansprüche, wobei die erste Antriebsstange (13) und/oder die zweite Antriebsstange versehen sind mit einer Verzahnung, um in die Verzahnung des jeweiligen Ausgangszahnrads (11, 21) zu greifen, und wobei das jeweilige Ausgangszahnrad (11, 21) versehen ist mit oder bereitgestellt ist auf einem Schaftteil (11a, 21a), das sich radial in einer Rille in der jeweiligen Antriebsstange (13, 23) befindet.

13. Bewegungsmechanismus (1) nach einem der vorhergehenden Ansprüche, wobei das Trägerelement (3) eine Spiegeloberfläche, eine Anzeige und/oder eine Kamera trägt, die bevorzugt im Wesentlichen unbeweglich in Bezug auf das Trägerelement befestigt ist.

14. Außenspiegelvorrichtung für ein Fahrzeug, versehen mit einem Bewegungsmechanismus (1) nach einem der vorhergehenden Ansprüche.

15. Fahrzeug, insbesondere ein Motorfahrzeug, versehen mit einem Bewegungsmechanismus (1) nach einem der Ansprüche 1-13 und/oder einer Außenspiegelvorrichtung nach Anspruch 14.

## Revendications

1. Mécanisme de mouvement (1) comprenant un élément de base (2) et un élément de support (3) qui, insérés entre eux, forment une construction de charnière à rotule, l'élément de support (3) pouvant tourner par rapport à l'élément de base (2) autour d'au moins un premier axe virtuel (A), qui passe sensiblement par un centre virtuel (M) de la construction de charnière à rotule, l'élément de support (3) étant prévu avec des moyens d'entraînement pour permettre à l'élément de support (3) d'être mobile par rapport à l'élément de base (2), lesquels moyens d'entraînement comprennent un premier moteur électrique (16) et une première transmission (10) ayant une roue dentée de sortie (11), **caractérisé en ce que** lesdits moyens d'entraînement sont logés dans l'élément de support (3) afin de se déplacer conjointement avec l'élément de support (3) lorsque l'élément de support (3) est mobile par rapport à l'élément de base (2), ladite roue dentée de sortie (11) de la première transmission (10) mettant en prise une première tige d'entraînement (13) non droite, c'est-à-dire incurvée, positionnée dans l'élément de support (3), ladite première tige d'entraînement (13) étant prévue avec une partie d'ancrage (14) qui est raccordée avec l'élément de base (2) de sorte que ladite première tige d'entraînement (13) ne se déplace pas conjointement avec l'élément de support (3) lorsque ce dernier est déplacé par rapport à l'élément de base (2).

2. Mécanisme de mouvement (1) selon la revendication 1, dans lequel l'élément de support (3) peut tourner par rapport à l'élément de base (2) également autour d'un deuxième axe virtuel (B), qui passe sensiblement par ledit centre virtuel de la construction de charnière à rotule, les moyens d'entraînement logés dans l'élément de support (3) comprenant une seconde transmission (20) avec une seconde roue dentée de sortie (21), ladite seconde roue dentée de sortie (21) mettant en prise une seconde tige d'entraînement non droite, c'est-à-dire incurvée, positionnée dans l'élément de support (3), ladite seconde tige d'entraînement étant prévue avec une seconde partie d'encrage (24) qui est raccordée à la partie de base de sorte que ladite seconde tige d'entraînement ne se déplace pas conjointement avec l'élément de support (3) lorsque ce dernier est déplacé par rapport à l'élément de base (2).

3. Mécanisme de mouvement (1) selon la revendication 1 ou 2, dans lequel la première partie d'ancrage (14) est montée en rotation dans une certaine mesure par rapport à un deuxième axe virtuel (B) dans un évidement (15) dans l'élément de base (2), dans lequel le deuxième axe virtuel (B) passe sensiblement par ledit centre virtuel de la construction de charnière à rotule, et dans lequel le deuxième axe virtuel (B) fait un angle d'environ 90° avec le premier axe virtuel (A) dans un plan dans lequel les deux axes virtuels (A, B) sont sensiblement positionnés.

4. Mécanisme de mouvement (1) selon la revendication 2 ou 3, dans lequel la seconde partie d'ancrage (24) est montée en rotation dans une certaine mesure par rapport au premier axe virtuel (A) dans un second évidement (25) dans l'élément de base (2).

5. Mécanisme de mouvement selon l'une quelconque des revendications précédentes, dans lequel la première tige d'entraînement (13) a la forme d'un segment annulaire dont un axe virtuel central coïncide sensiblement avec le premier axe virtuel.

6. Mécanisme de mouvement selon l'une quelconque des revendications 2 à 5, dans lequel la seconde tige d'entraînement (23) a la forme d'un segment annulaire dont un axe central virtuel coïncide sensiblement avec le deuxième axe virtuel (B).

7. Mécanisme de mouvement selon l'une quelconque des revendications 1 à 4, dans lequel la première et/ou la seconde tige d'entraînement (13, 23) a la forme d'un segment annulaire qui peut tourner par rapport à un troisième axe virtuel (C), qui passe sensiblement par ledit centre virtuel de la construction de charnière à rotule et qui, dans le plan dans lequel le troisième axe virtuel (C) et le premier axe virtuel (A) et/ou le deuxième axe virtuel (B) sont sensiblement positionnés, fait un angle d'environ 45° avec ledit premier axe virtuel (A) et/ou un angle d'environ 45° avec ledit deuxième axe virtuel (B).

8. Mécanisme de mouvement selon l'une quelconque des revendications 3 à 7, dans lequel le premier évidement (15) se présente sous la forme d'un trou fendu (15) et la première partie d'ancrage (14) se présente sous la forme d'un arbre (14) de préférence de forme cylindrique, pouvant tourner dans le trou fendu (15), qui peut coulisser dans le sens de la longueur du trou fendu (15), de préférence avec la longueur du trou fendu (15) qui est sensiblement orientée dans une direction sensiblement autour du centre virtuel (M) et sensiblement dans le plan dans lequel les deux axes virtuels (A, B) sont sensiblement positionnés.

9. Mécanisme de mouvement (1) selon l'une quelconque des revendications 3 à 8, dans lequel la première tige d'entraînement (13) est positionnée dans l'élément de support (3) de sorte que, suite à une rotation de l'élément de support (3) autour du premier axe virtuel (A), un déplacement relativement petit de la première partie d'ancrage (14) devient possible, de préférence dans lequel, sensiblement dans le plan dans lequel les deux axes virtuels (A, B) sont sensiblement positionnés, ledit relativement petit déplacement est un mouvement de pivotement relativement petit autour du centre virtuel (M).

10. Mécanisme de mouvement (1) selon l'une quelconque des revendications 9, dans lequel l'élément de base (2) est prévu avec un premier évidement (15) qui est agencé de manière mobile dans l'élément de base (2) de sorte que, lors d'une rotation de l'élément de support (3) autour du premier axe virtuel (A), un déplacement relativement petit dudit premier évidement (15) et/ou de la première partie d'ancrage (14) positionnée à l'intérieur de ce dernier devient possible, de préférence dans lequel ledit relativement petit déplacement est sensiblement positionné dans le plan dans lequel les deux axes virtuels (A, B) sont sensiblement positionnés, et concerne un mouvement de pivotement relativement petit autour du centre virtuel (M) .

11. Mécanisme de mouvement (1) selon l'une quelconque des revendications 8 à 10, dans lequel le second évidement (25) et la seconde partie d'ancrage (24) placée à l'intérieur de ce dernier, sont configurés de sorte que la seconde partie d'ancrage (24) peut tourner dans une certaine mesure par rapport au premier axe virtuel (A) et de sorte que le déplacement de la seconde partie d'ancrage (24) et/ou du premier axe virtuel (A) par rapport à l'élément de base (2) est empêché.

12. Mécanisme de mouvement (1) selon l'une quelconque des revendications précédentes, dans lequel la première tige d'entraînement (13) et/ou la seconde tige d'entraînement est prévue avec une denture pour s'engrener avec la denture de la roue dentée de sortie (11, 21) respective et dans lequel la roue dentée de sortie (11, 21) respective est prévue avec ou est prévue sur une partie d'arbre (11a, 21a) qui est radialement positionnée dans une rainure dans la tige d'entraînement (13, 23) respective.

13. Mécanisme de mouvement (1) selon l'une quelconque des revendications précédentes, dans lequel l'élément de support (3) supporte une surface de rétroviseur, un écran et/ou une caméra, qui est de préférence fixé(e) de manière sensiblement immobile par rapport audit élément de support.

14. Dispositif de rétroviseur extérieur pour un véhicule, prévu avec un mécanisme de mouvement (1) selon l'une quelconque des revendications précédentes.

15. Véhicule, en particulier un véhicule à moteur, prévu avec un mécanisme de mouvement (1) selon l'une quelconque des revendications 1 à 13 et/ou un dispositif de rétroviseur extérieur selon la revendication 14.
